# EUROPÄISCHE PATENTANMELDUNG

(11) **EP 4 350 660 A1**
(43) Veröffentlichungstag der Anmeldung: **10.04.2024**
(21) Anmeldenummer: 23196772.0
(22) Anmeldetag: 12.09.2023
(51) Int. Cl.: G08G 1/01, G01C 21/00

(54) **SYSTEM UND VERFAHREN ZUR PRÄDIKTION EINER ZUKÜNFTIGEN POSITION EINES VERKEHRSTEILNEHMERS**

(30) Priorität: 05.10.2022 DE 102022210504
(71) Anmelder: Continental Automotive Technologies GmbH, 30165 Hannover (DE)
(72) Erfinder: Senninger, Dominik, 60488 Frankfurt am Main (DE); Wagner, Matthias, 60488 Frankfurt am Main (DE)
(74) Vertreter: Continental Corporation

(57) **Zusammenfassung**

Die Erfindung betrifft ein System zur Prädiktion einer zukünftigen Position von Verkehrsteilnehmern in einem vorgegebenen Straßenabschnitt, umfassend einer Speichereinheit (1), in welcher zumindest die historischen Sensordaten der erfassten Verkehrsteilnehmer in dem vorgegebenen Straßenabschnitt gespeichert sind,
wobei
ein Prozessor (2) vorgesehen ist, welcher die historischen Bewegungsdaten der jeweiligen Verkehrsteilnehmer aus den historischen Sensordaten extrahiert und welcher ferner dazu ausgebildet ist, anhand der historischen Bewegungsdaten eine genügend genaue hochauflösende Karte des vorgegebenen Straßenabschnitts mittels eines maschinellen Lernverfahrens zu erlernen, und wobei der Prozessor (2) ferner dazu ausgebildet ist, anhand einer Eingabe von aktuellen Bewegungsdaten eines Verkehrsteilnehmers eine Prädiktion zumindest einer zukünftigen Position dieses Verkehrsteilnehmers in diesem Straßenabschnitt zumindest unter einer impliziten Verwendung der erlernten hochauflösenden Karte zu bestimmen.

## Beschreibung

Die Erfindung betrifft ein System und Verfahren zur Prädiktion einer zukünftigen Position von Verkehrsteilnehmern in einem vorgegebenen Straßenabschnitt, umfassend einer Speichereinheit, in welcher zumindest die historischen Sensordaten der erfassten Verkehrsteilnehmer in dem vorgegebenen Straßenabschnitt gespeichert sind.

Für viele Anwendungen werden Prädiktionen von Verkehrsteilnehmern benötigt, insbesondere auch für Systeme zur Warnung von vulnerablen Verkehrsteilnehmern. Um jedoch eine Prädiktion mit Hilfe klassischer Methoden in einer Qualität zu erreichen, die eine sinnvolle Anwendung der Prädiktion ermöglicht, ist es notwendig eine hochgenaue Karte zur Verfügung zu haben.

Hochauflösende (HD; High Definition) Karten sind hochpräzise, insbesondere zentimetergenaue Karten, die von beispielsweise autonomen Fahrzeugen zur Unterstützung der Navigation des Fahrzeugs verwendet werden können. Dazu können die HD-Karten mehrere Informationsschichten aufweisen, die die Straßengeometrie in der Straße zeigen. HD-Karten werden an ein autonomes Fahrzeug üblicherweise durch einen HD-Kartenanbieter bereitgestellt.

Das Erstellen solch einer HD-Karte ist jedoch mit hohen Kosten verbunden, zudem sind diese Karten für Fußgänger und Radfahrer auf dem Markt oft nicht erhältlich. Diese Abhängigkeit von manuell erstellten (und damit teuren) hochgenauen Karten für alle Verkehrsteilnehmer schränkt die praktische Verwendung zur Warnung stark ein.

So offenbart die US 9,659,496 B2 ein Verfahren und ein System zur Erhöhung der Sicherheit auf einem Straßennetz, umfassend: einen Interaktionsdetektor mit einer Kommunikationsschnittstelle zum Empfangen einer Vielzahl von Überwachungsvektoren von einem ersten Fahrzeug und einem zweiten Fahrzeug, die sich auf dem Straßennetz bewegen;
ein Interaktionsrisikomodul, das dafür ausgelegt ist, aus der Vielzahl von Überwachungsvektoren zu bestimmen, ob es eine Interaktion zwischen dem ersten Fahrzeug und dem zweiten Fahrzeug gibt, wobei die Interaktion ohne Nutzung einer Vorabkenntnis einer vorgeplanten Route von jedem von dem ersten Fahrzeug und dem zweiten Fahrzeug auf dem Straßennetz bestimmt wird, und einen Nachrichtengenerator, der dafür ausgelegt ist, als Reaktion darauf, dass durch das Interaktionsrisikomodul eine Interaktion bestimmt wird, eine Nachricht an wenigstens das zweite Fahrzeug zu erzeugen und die Nachricht über die Kommunikationsschnittstelle an das zweite Fahrzeug zu senden.

Die US 11,143,513 B2 offenbart ein computerimplementiertes Verfahren zum Erzeugen einer Karte für autonomes Fahren, wobei das Verfahren Folgendes umfasst:
Empfangen von Wahrnehmungsdaten, die einen Satz von Trajektorien beschreiben, die von einer Vielzahl von Fahrzeugen gefahren werden, die über eine Zeitspanne durch einen Straßenabschnitt einer Straße navigieren; Durchführen einer Analyse unter Verwendung eines Satzes von Regeln für den Satz von Trajektorien, um das Fahrverhalten der Vielzahl von Fahrzeugen zu bestimmen;
Bestimmen einer Fahrspurkonfiguration von einer oder mehreren Fahrspuren des Straßensegments auf der Grundlage des Fahrverhaltens der Vielzahl von Fahrzeugen, umfassend: Bestimmen einer Anzahl von Fahrspuren innerhalb des Straßensegments auf der Grundlage des Fahrverhaltens der Vielzahl von Fahrzeugen innerhalb des Straßensegments; und für jede der Fahrspuren,
Bestimmen einer Fahrspurbreite auf der Grundlage von Trajektorienmustern einer Vielzahl von Trajektorien innerhalb der Fahrspur; Kennzeichnen eines Kartensegments einer Navigationskarte, die dem Straßensegment entspricht, um Fahrspurkonfigurationsinformationen der einen oder mehreren Fahrspuren einzuschließen, um eine Karte mit höherer Auflösung (HD) zu erzeugen, wobei die Fahrspurkonfigurationsinformationen die Anzahl von Fahrspuren und die Fahrspurbreite jeder Fahrspur einschließen, wobei die HD-Karte verwendet wird, um einen Pfad zu erzeugen, um ein autonom fahrendes Fahrzeug anschließend autonom zu fahren; und Übertragen der HD-Karte an das autonom fahrende Fahrzeug, um das Steuern des autonom fahrenden Fahrzeugs zu ermöglichen, um auf dem Straßensegment gemäß dem Pfad zu fahren, der basierend auf der HD-Karte erzeugt wurde.

Es ist daher eine Aufgabe der Erfindung ein günstiges und einfaches System und ein Verfahren zur Prädiktion einer zukünftigen Position von Verkehrsteilnehmern mithilfe einer hochauflösenden Karte bereitzustellen.

Ferner ist eine weitere Aufgabe eine Verwendung eines solchen Systems und Verfahrens bereitzustellen.

Die Aufgabe wird gelöst durch ein System mit den Merkmalen des Anspruchs 1 und ein Verfahren mit den Merkmalen des Anspruchs 7. Ferner wird die Aufgabe gelöst durch eine Verwendung mit den Merkmalen des Anspruchs 14.

Die Aufgabe wird gelöst durch ein System zur Prädiktion einer zukünftigen Position von Verkehrsteilnehmern in einem vorgegebenen Straßenabschnitt,
umfassend einer Speichereinheit, in welcher zumindest die historischen Sensordaten der erfassten Verkehrsteilnehmer in dem vorgegebenen Straßenabschnitt gespeichert sind, und
wobei ein Prozessor vorgesehen ist, welcher die historischen Bewegungsdaten der jeweiligen Verkehrsteilnehmer aus den historischen Sensordaten extrahiert und welcher ferner dazu ausgebildet ist anhand der historischen Bewegungsdaten eine genügend genaue hochauflösende Karte des vorgegebenen Straßenabschnitts mittels eines maschinellen Lernverfahrens zu erlernen, und wobei
der Prozessor ferner dazu ausgebildet ist, anhand einer Eingabe von aktuellen Bewegungsdaten eines Verkehrsteilnehmers eine Prädiktion zumindest einer zukünftigen Position dieses Verkehrsteilnehmers in diesem Straßenabschnitt zumindest unter einer impliziten Verwendung der erlernten hochauflösenden Karte zu bestimmen.

Die aktuellen Bewegungsdaten umfassen dabei auch eine Zeitspanne vergangener Bewegungsdaten des Verkehrsteilnehmers.

Durch das erfindungsgemäße System wird anhand historischer Bewegungsdaten eine genügend genaue hochauflösende Karte zur Prädiktion der Positionen der erfassten Verkehrsteilnehmer erlernt. Dabei kann beispielsweise die genügend genaue hochauflösende Karte implizit in einem beispielsweise künstlichen neuronalen Netz, welches zur Prädiktion von Positionen von Verkehrsteilnehmer trainiert ist, berücksichtigt werden oder die genügend genaue hochauflösende Karte kann als Vektor-Karte ausgebildet sein, welche ebenfalls zur Prädiktion herangezogen werden kann.

Durch ein solches System kann das aufwändige Erstellen einer hochgenauen Karte vermieden werden.

In weiterer Ausbildung ist die erlernte genügend genaue hochauflösende Karte als trainiertes künstliches neuronales Netz ausgebildet, wobei eine Recheneinheit vorgesehen ist zur Eingabe von aktuellen Bewegungsdaten der Verkehrsteilnehmer in diesem Straßenabschnitt in das so generierte künstliche neuronale Netz zur Prädiktion der zukünftigen Positionen der Verkehrsteilnehmer in diesem Straßenabschnitt. Dadurch sind die notwendigen Karteninformationen implizit im neuronalen Netz enthalten. Hierbei wird für jeden Straßenabschnitt, für den eine Vorhersage ermöglicht werden soll, ein eigenes künstliches neuronales Netz mit historischen Bewegungsdaten aus diesem Straßenabschnitt trainiert, das speziell für diesen Straßenabschnitt optimale Ergebnisse liefern kann. Durch eine als neuronales Netz trainierte hochauflösende Karte können nicht nur die Positionen der Fahrspuren sowie der Fußwege vorhergesagt werden, sondern zusätzlich auch noch, welche Geschwindigkeiten zu erwarten sind.

Ferner kann der Prozessor dazu ausgebildet sein, zumindest anhand von relativen historischen Positionen der Verkehrsteilnehmer als Bewegungsdaten eine relative hochauflösende Karte als künstliches neuronales Netz zu generieren, wobei die Recheneinheit dazu ausgebildet ist, bei Eingabe aktueller Bewegungsdaten der Verkehrsteilnehmer die relativen zukünftigen Positionen als einheitliches Zeitintervall eines Verkehrsteilnehmers zu generieren. Somit wird für jeden Straßenabschnitt, für den eine Vorhersage möglich sein soll, ein eigenes künstliches neuronales Netz mit historischen Daten aus diesem Straßenabschnitt trainiert, das speziell für diesen Straßenabschnitt optimale Ergebnisse liefern kann. Ferner können die Bewegungsdaten zusätzlich zu den relativen historischen Positionen der Verkehrsteilnehmer die relativen historischen Geschwindigkeiten der Verkehrsteilnehmer und/oder die relative historische Richtung und/oder die relativen historischen Beschleunigungen umfassen. Weitere Bewegungsdaten bzw. Informationen können beispielsweise Informationen über weitere Verkehrsteilnehmer etc. sein.

Dabei bedeutet relativ beispielsweise aus der Koordinatensicht eines Fahrzeugs/Verkehrsteilnehmers in dessen Koordinatensystem.

Dadurch ist eine relative Prädiktion der zukünftigen Positionen der Verkehrsteilnehmer in einem vorgegebenem Straßenabschnitt, beispielsweise Kreuzung, möglich, wobei die genügend genaue hochauflösende Karteninformation implizit im trainierten künstlichen neuronalen Netz enthalten ist. Das künstliche neuronale Netz wird mit historischen Daten aus diesem Straßenabschnitt trainiert, und erzeugt bei einer Eingabe aus aktuellen Bewegungsdaten des vorherzusagenden Verkehrsteilnehmers und seiner Umgebung eine hinreichend genaue relative Prädiktion zumindest in Bezug auf die zukünftigen Positionen des Verkehrsteilnehmers.

In weiterer Ausbildung können die Bewegungsdaten die absoluten historischen Positionen, welche zumindest an die relativen historischen Positionen gekoppelt sind, umfassen, wobei der Prozessor dazu ausgebildet ist, eine absolute hochauflösende Karte als künstliches neuronales Netz zumindest unter Verwendung der historischen relativen und absoluten Positionen der Verkehrsteilnehmer zu generieren und wobei die Recheneinheit dazu ausgebildet ist, bei Eingabe aktueller Bewegungsdaten eines Verkehrsteilnehmers in das so generierte künstliche neuronale Netz die absoluten zukünftigen Positionen des Verkehrsteilnehmers zu generieren.

Somit trainiert das neuronale Netz implizit eine Prädiktion, die von der absoluten Position abhängig ist.

In weiterer Ausbildung ist der Prozessor dazu ausgebildet, aus den historischen Bewegungsdaten historische Schwarmtrajektorien zu generieren und ferner dazu ausgebildet, aus den historischen Schwarmtrajektorien eine Vektorkarte als hochauflösende Karte für den Straßenabschnitt zu generieren, wobei eine Recheneinheit vorgesehen ist, welche dazu ausgebildet ist, eine Prädiktion der zukünftigen Positionen der Verkehrsteilnehmer in diesem Straßenabschnitt unter Verwendung der aktuellen Bewegungsdaten und der Vektorkarte als hochauflösende Karte zu generieren.

Dabei kann ein Durchschnittspfad für einen betrachteten Fahrzeugschwarm auf dem betrachteten Straßenabschnitt definiert werden, der als Schwarmtrajektorie für den bestimmten Straßenabschnitt bezeichnet wird.

Dabei können solche historischen Schwarmtrajektorien beispielsweise automatisch aus gesammelten Crowd-Daten des betreffenden Straßenabschnittes generiert werden. Eine als Vektorkarte ausgebildete hochauflösende Karte zeigt die Fahrspuren, welche die in der Realität genutzten Routen zeigen und nicht die von einem Planer erwarteten Routen. Zudem können zusätzliche Informationen enthalten sein, wie Abweichungen vom optimalen Weg. Dadurch ist bei Verwendung von aktuellen Bewegungsdaten eine präzise Vorhersage der Positionen der Verkehrsteilnehmer möglich.

Ferner wird die Aufgabe gelöst durch ein Verfahren zur Prädiktion einer zukünftigen Position von Verkehrsteilnehmern in einem vorgegebenen Straßenabschnitt, umfassend der Schritte:
- Bereitstellen zumindest von historischen Sensordaten der erfassten Verkehrsteilnehmer in dem vorgegebenen Straßenabschnitt,
- Extrahieren von historischen Bewegungsdaten der Verkehrsteilnehmer aus den historischen Sensordaten und erlernen anhand der historischen Bewegungsdaten mittels eines maschinellen Lernverfahrens einer genügend hochauflösenden Karte für den vorgegebenen Straßenabschnitt, und
- Bestimmen anhand aktueller Bewegungsdaten eines Verkehrsteilnehmers eine Prädiktion zumindest einer zukünftigen Position dieses Verkehrsteilnehmers in diesem Straßenabschnitt zumindest unter einer impliziten Verwendung der erlernten hochauflösenden Karte.

Dabei können die Vorteile des Systems auf das Verfahren übertragen werden. Insbesondere kann das Verfahren auf dem erfindungsgemäßen System durchgeführt werden.

In einer weiteren Ausbildung wird die erlernte hochauflösende Karte als trainiertes künstliches neuronales Netz ausgebildet, zur Eingabe von aktuellen Bewegungsdaten der Verkehrsteilnehmer in diesem Straßenabschnitt in das so generierte künstliche neuronale Netz zur Prädiktion der zukünftigen Positionen der Verkehrsteilnehmer in diesem Straßenabschnitt.

In einer weiteren Ausbildung umfasst das Verfahren die weiteren Schritte:
- Generieren zumindest anhand von relativen historischen Positionen der Verkehrsteilnehmer als Bewegungsdaten eine relative hochauflösende Karte als künstliches neuronales Netz und eingeben in das künstliche neuronale Netz von aktuellen Bewegungsdaten der Verkehrsteilnehmer zur Generierung relativer zukünftiger Positionen eines Verkehrsteilnehmers.

Ferner kann das Verfahren noch die weiteren Schritte umfassen:
- Generieren zumindest anhand von relativen und absoluten historischen Positionen der Verkehrsteilnehmer als Bewegungsdaten eine absolute hochauflösende Karte als künstliches neuronales Netz und eingeben in das so generierte künstliche neuronale Netz von aktuellen Bewegungsdaten der Verkehrsteilnehmer zur Generierung absoluter zukünftiger Positionen eines Verkehrsteilnehmers.

Alternativ kann das Verfahren die Schritte umfassen:
- Generieren von historischen Schwarmtrajektorien aus den historischen Bewegungsdaten und Generieren einer Vektorkarte als hochauflösende Karte für den Straßenabschnitt aus den historischen Schwarmtrajektorien und Generieren einer Prädiktion der zukünftigen Positionen der Verkehrsteilnehmer in diesem Straßenabschnitt unter Verwendung der aktuellen Bewegungsdaten und der Vektorkarte als hochauflösende Karte.

Diese Generierung von einer solchen Vektorkarte kann beispielsweise durch den Schritt erzielt werden:
- Generieren von historischen Bewegungstrajektorien mit einer vorgegebenen Länge aus den erkannten historischen Bewegungsdaten als Schwarmtrajektorien.

Ferner umfassend beispielsweise den weiteren Schritt:
- Clustern der gleichen oder ähnlichen historischen Bewegungstrajektorien und Erstellen von Routen aus den jeweiligen Clustern.

Ferner umfassend beispielsweise den weiteren Schritt:
- Umwandeln von relevanten Routen in gerichtete Graphen und Aufteilen der gerichteten Graphen in Fahrspuren und generieren einer hochauflösenden Karte anhand der Fahrspuren.

Dadurch kann kostengünstig aus Schwarmtrajektorien eine Vektorkarte als hochauflösende Karte zur Verwendung von Prädiktionen von erfassten Verkehrsteilnehmern für einen begrenzten Straßenabschnitt generiert werden. Ferner wird die Aufgabe gelöst durch eine Verwendung eines wie oben beschriebenen Verfahrens oder eines wie oben beschriebenen Systems zur Prädiktion zumindest der zukünftigen Positionen der erfassten Verkehrsteilnehmer in einem vorgegebenen Straßenabschnitt in einem Alarmsystem zur Warnung vulnerabler Verkehrsteilnehmer in dem vorgegebenen Straßenabschnitt.

Weitere Vorteile und Eigenschaften der Erfindung gehen aus der nachfolgenden Beschreibung hervor, in der Ausführungsbeispiele der Erfindung anhand der Zeichnungen im Einzelnen erläutert werden. Es zeigen schematisch:
- FIG 1:: schematisch ein erstes Verfahren in einer ersten Ausgestaltung,
- FIG 2:: das Ergebnis des Verfahrens in der ersten Ausgestaltung,
- FIG 3:: schematisch das Verfahren in einer zweiten Ausgestaltung,
- FIG 4:: das Ergebnis des Verfahrens in der zweiten Ausgestaltung,
- FIG 5:: eine weitere Ausgestaltung des erfindungsgemäßen Verfahrens,
- FIG 6:: das Ergebnis einer Clusterung,
- FIG 7:: eine Aufteilung einer Fahrspur.

Insbesondere ist bei autonom betriebenen Fahrzeugen eine Prädiktion von Verkehrsteilnehmern notwendig, um damit eine Warnung von vulnerablen Verkehrsteilnehmern generieren zu können. Diese sollte für alle Verkehrsteilnehmer eines Straßenabschnittes generierbar sein. Hierfür ist es notwendig, eine hochgenaue hochauflösende Karte zu verwenden. Das Erstellen solch einer hochauflösenden Karte ist jedoch mit hohen Kosten verbunden.

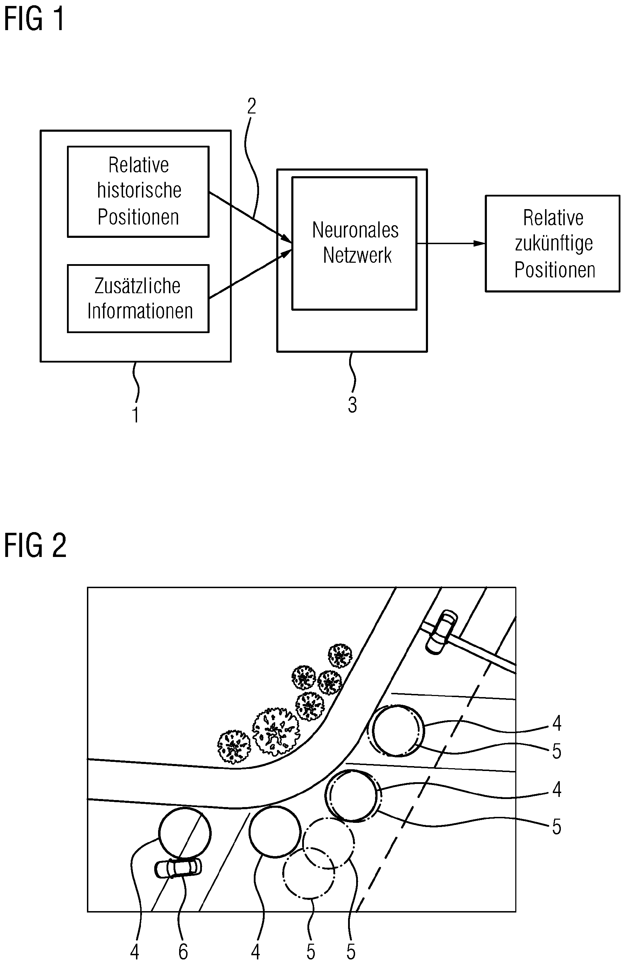

FIG 1 zeigt schematisch ein Verfahren zur Prädiktion einer zukünftigen Position von Verkehrsteilnehmern in einem vorgegebenen Straßenabschnitt in einer ersten Ausgestaltung mittels einer einfach generierten hochauflösenden Karte.

Dabei sind zunächst historische Sensordaten der erfassten Verkehrsteilnehmer in dem vorgegebenen Straßenabschnitt, welche beispielsweise in einer Speichereinheit 1 gespeichert sind, bereitgestellt.

Dabei können die historischen Sensordaten jeweils mit einem Zeitstempel versehen sein.

Anschließend werden die historischen Bewegungsdaten der Verkehrsteilnehmer aus den historischen Sensordaten mittels eines Prozessors 2 extrahiert. Diese extrahierten und verwendeten Sensordaten entsprechen im Wesentlichen einer historischen Bewegungstrajektorie mit einem Zeitstempel.

Anschließend kann anhand der historischen Bewegungsdaten eine hochauflösende Karte als künstliches neuronales Netz 3 für den vorgegebenen Straßenabschnitt trainiert werden. Dieses ist dazu ausgebildet, anhand von Bewegungsdaten, insbesondere den relativen Positionen der Verkehrsteilnehmer, dahingehend trainiert zu werden, eine zukünftige Position eines Verkehrsteilnehmers vorherzusagen; bezogen auf den vorgegebenen Straßenabschnitt.

Dabei kann das künstliche neuronale Netz 3 als historische Bewegungsdaten neben den relativen Positionen als Trainingsdaten jeweils die Geschwindigkeit, die Richtung und die Beschleunigung als Trainingsdaten als zusätzliche Informationen erhalten.

Somit wird das neuronale Netz 3 zumindest anhand der relativen historischen Positionen der Verkehrsteilnehmer in dem Straßenabschnitt trainiert. Zusätzlich kann das neuronale Netz 3 anhand weiterer Informationen trainiert werden.

Zusätzliche Informationen können beispielsweise Informationen über weitere Verkehrsteilnehmer, vergangene Geschwindigkeiten o. Ä. sein, welches zum Training des neuronalen Netzes 3 verwendet werden können. Ein solches trainiertes neuronales Netz 3 kann somit daraus die relativen zukünftigen Positionen eines Verkehrsteilnehmers auf diesem Straßenabschnitt anhand der aktuellen Bewegungsdaten des Verkehrsteilnehmers als Input vorhersagen.

Zur Prädiktion einer zukünftigen Position eines Verkehrsteilnehmers werden daher aktuelle Bewegungsdaten des vorherzusagenden Verkehrsteilnehmers und seiner Umgebung verwendet. Dabei können die aktuellen Bewegungsdaten die relativen aktuellen Positionen, die aktuelle Geschwindigkeit, die aktuelle Richtung und die aktuelle Beschleunigung des vorherzusagenden Verkehrsteilnehmers und seiner Umgebung umfassen, so dass neben der zukünftigen relativen Position auch diese zukünftigen relativen Bewegungsdaten vorhergesagt werden können. Dabei umfassen die aktuellen Daten auch vergangene Daten, d.h. eine Zeitspanne bis zu den aktuellen Daten.

Durch ein so antrainiertes neuronales Netz 3 ist die hochauflösende Karteninformation implizit im neuronalen Netz 3 enthalten. Das so antrainierte neuronale Netz 3 kann anhand der aktuellen Bewegungsdaten insbesondere für die Vorhersage in Bezug auf die zukünftige relative Position des Verkehrsteilnehmers sehr gute Ergebnisse erzielen.

FIG 2 zeigt das Ergebnis der Prädiktion eines solchen künstlichen neuronalen Netzes 3. Die ersten Kreise 4 zeigen die echten zukünftigen Positionen in eins, zwei, drei, vier Sekunden des vorherzusagenden Verkehrsteilnehmers, hier des Fahrzeugs 6, und die zweiten Kreise 5 die Positionen, die von dem als hochauflösende Karte ausgebildeten neuronalen Netz 3 vorhergesagt wurden, wobei jedoch eine gewisse Abweichung vorhanden ist.

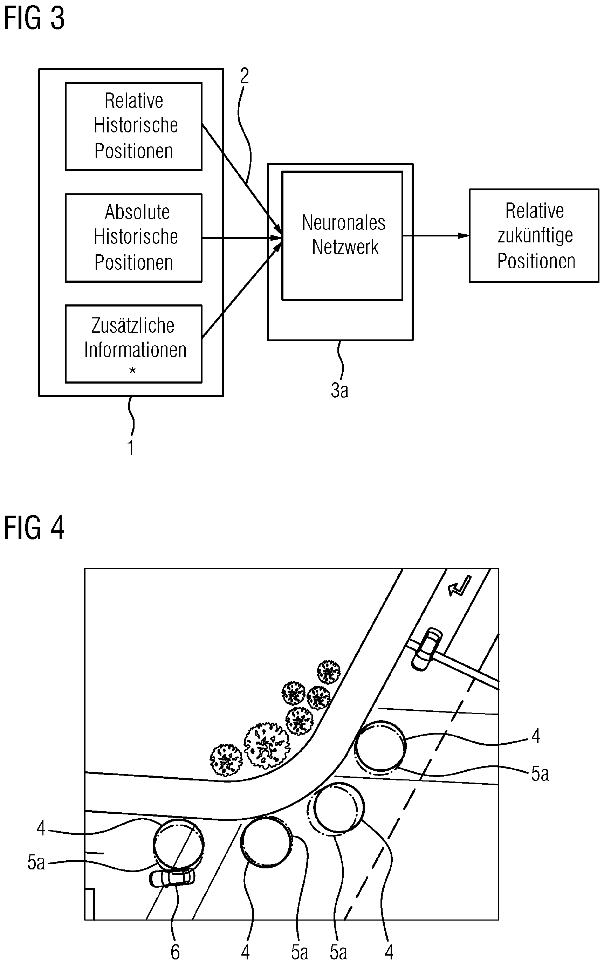

FIG 3 zeigt schematisch ein Verfahren zur Prädiktion einer zukünftigen Position von Verkehrsteilnehmern in einem vorgegebenen Straßenabschnitt in einer zweiten Ausgestaltung.

Dabei erhält ein anzutrainierendes neuronales Netz 3a wiederum die relativen historischen Positionen als einheitliches Zeitintervall der Verkehrsteilnehmer in dem Straßenabschnitt. Zudem wird zu diesen üblicherweise verwendeten Daten aber auch die absolute Position der Verkehrsteilnehmer verwendet. Dadurch erlernt das neuronale Netz 3a implizit eine Prädiktion, die von der absoluten Position abhängig ist. Dies bedeutet, dass durch das künstliche neuronale Netz 3a eine absolute Prädiktion bezogen zumindest auf die absolute Position eines Verkehrsteilnehmers generierbar ist. Das wiederum bedeutet, dass die absoluten Karteninformation implizit im neuronalen Netz 3a enthalten sind.

Das neuronale Netz 3a erhält somit als Trainingsdaten die relativen historischen Positionen als einheitliches Zeitintervall und die absoluten Positionen in Bezug auf ein geographisches Koordinatensystem eines Verkehrsteilnehmers. Das neuronale Netz 3a lernt implizit unter Verwendung der absoluten Positionen die Karte und Topologie der Kreuzung und prädiziert daraus die absoluten zukünftigen Positionen eines Verkehrsteilnehmers als einheitliches Zeitintervall.

Ferner kann das neuronale Netz 3a wiederum anhand weiterer Informationen trainiert werden. Zusätzliche Informationen können beispielsweise Informationen über weitere Verkehrsteilnehmer, vergangene Geschwindigkeiten, o. Ä. sein, welches zum Training des neuronalen Netzes 3a verwendet werden kann. Ein solches Netz 3a kann somit daraus die absoluten zukünftigen Positionen von Verkehrsteilnehmern auf diesem Straßenabschnitt anhand der aktuellen und vergangenen Bewegungsdaten eines Verkehrsteilnehmers als Input vorhersagen. Somit erlernt das neuronale Netz 3a implizit nicht nur die Positionen der Fahrspuren/Fußwege, sondern zusätzlich auch noch, welche Geschwindigkeiten etc. zu erwarten sind.

FIG 4 zeigt das Ergebnis der Prädiktion eines neuronalen Netzes 3a, das zusätzlich mit absoluten Positionen und genau für diese Kreuzung trainiert wurde, d.h. das Ergebnis des Verfahrens in der zweiten Ausgestaltung.

Die ersten Kreise 4 zeigen wiederum die echten zukünftigen Positionen in eins, zwei, drei, vier Sekunden, die zweiten Kreise 5a die Positionen, die von dem als hochauflösende Karte ausgebildeten neuronalen Netz 3a vorhergesagt wurden. Hier stimmen die Prädiktion und die realen zukünftigen Positionen sehr gut überein, da implizit erlernt wurde, dass sich das Fahrzeug 6 hier auf einer Abbiegespur befindet und abbiegen wird. Ferner wurde zusätzlich erkannt, dass der Abbremsvorgang nicht weiter fortgesetzt werden wird, da die Abbremsung anscheinend an dieser Stelle für gewöhnlich vor dem eigentlichen Abbiegevorgang stattfindet. Diese Vorhersage der Geschwindigkeiten geht deutlich über das hinaus, was für gewöhnlich aus vorhergehenden Datenpunkten ableitbar ist.

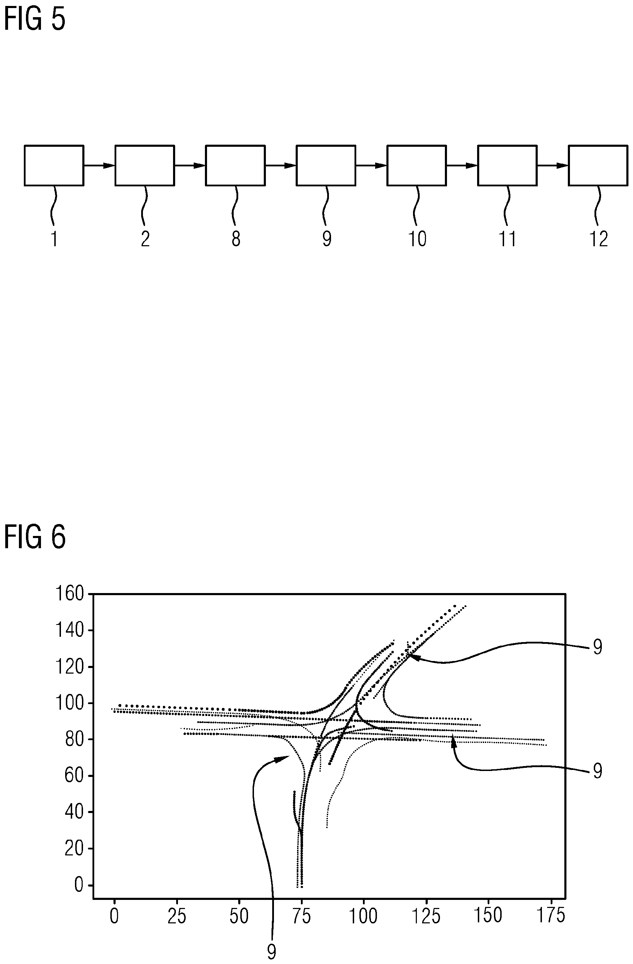

FIG 5 zeigt eine weitere Ausgestaltung eines erfindungsgemäßen Verfahrens. Bei diesem werden wiederum die zunächst historischen Sensordaten der erfassten Verkehrsteilnehmer in dem vorgegebenen Straßenabschnitt, welche in einer Speichereinheit 1 gespeichert sind, bereitgestellt.

Dabei können die historischen Sensordaten jeweils mit einem Zeitstempel versehen sein.

Anschließend werden die historischen Bewegungsdaten der Verkehrsteilnehmer aus den historischen Sensordaten mittels des Prozessors 2 extrahiert. Diese extrahierten und verwendeten Sensordaten entsprechen im Wesentlichen einer historischen Bewegungstrajektorie mit einem Zeitstempel. Dabei können die Bewegungsdaten jeweils den Breitengrad, Längengrad, Kurs, Geschwindigkeit, Zeitstempel, Informationen zu jedem einzelnen Datenpunkt umfassen, anhand dessen unvollständige Spuren/Bewegungstrajektorien herausgefiltert werden können. Eine Bewegungstrajektorie gilt als unvollständig, wenn sie weniger als eine bestimmte Anzahl von Messungen enthält oder ihre Startposition näher als eine bestimmte Entfernung (z. B. 30 m) zu ihrer Endposition liegt.

Ferner werden anschließend in einem weiteren Schritt alle Bewegungstrajektorien gefunden, die dieselbe Route benutzen (Schwarmtrajektorien). Dazu wird ein Clusteringalgorithmus 8 als maschinelles Lernverfahren herangezogen. Hierfür kann beispielsweise der DBScan-Algorithmus (Density-Based Spatial Clustering of Applications with Noise) herangezogen werden, welcher bezüglich seiner Parameter so gewählt wird, dass zumindest alle Routen gefunden werden.

FIG 6 zeigt das Ergebnis des Clusteringalgorithmus 8, welche verschiedene Beispielspuren von jeweiligen Clustern 9 zeigt.

In einem weiteren Schritt wird ein Bildverarbeitungsalgorithmus 10 verwendet, um eine zusammenhängende Linie für jedes Cluster 9 zu erhalten. Dabei kann hier beispielsweise der Gauß-Kernel verwendet werden. Alternativ kann eine Skelettierung verwendet werden. Bei der Skelettierung wird ein flächenhaftes Bildobjekt in eine bildpunktbreite, innere Skelettlinie umgewandelt.

Dadurch entstehen in der Regel einige Routen, die nur einen Teil einer anderen Route darstellen.

In einem weiteren Schritt 10 werden daher unnötige Routen beseitigt. Um diese zu finden, wird für jede Route geprüft, ob es eine andere Route gibt, die ähnlich ist, beispielsweise dieser Routen nahe sind oder der der Kurs ähnlich ist.

Diese Unterrouten werden in den zukünftigen Schritten nicht mehr berücksichtigt. Nun wird in einem weiteren Schritt die korrekte Anzahl der möglichen Routen anhand einer Graphengenerierung 11 gefunden.

Jede verbleibende Route wird dabei in einen gerichteten Graphen umgewandelt. Daher wird jede Position der Route als ein Knoten des Graphen berücksichtigt. Die jeweiligen Kanten des Graphen werden erstellt, indem jeder Knoten mit seinem besten Nachfolger verbunden wird. Der beste Nachfolger ist dabei derjenige Knoten, der am nächsten an der zuvor berechneten Richtung des Knotens liegt, mit der Einschränkung, dass er in die gleiche Richtung wie der zuvor bestimmte Knoten liegt.

Nach diesem Schritt weist jeder Knoten genau einen Vorgänger und einen Nachfolger auf, mit Ausnahme der Start- und Endposition.

In einem weiteren Schritt werden die Fahrspuren aufgeteilt. Hierfür kann ein Gaußsches Mischmodell 12 zum Einsatz kommen. Dabei werden die Knoten in zwei Fahrspuren aufgeteilt, wenn verschiedene Bedingungen erfüllt sind.

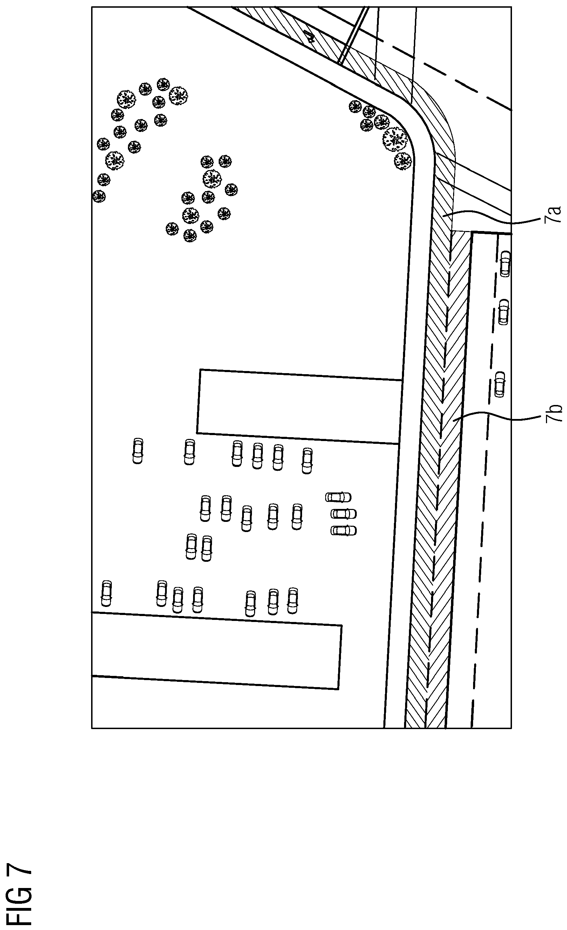

FIG 7 zeigt eine solche Aufteilung von einer Fahrspur in zwei Fahrspuren 7a,7b.

Dadurch kann eine Vektor-"Karte" als hochauflösende Karte für einen jeweiligen Straßenabschnitt erstellt werden. Die Unterschiede dieser Karte zu herkömmlichen Karten sind, dass diese automatisch aus den gesammelten Daten der Menschenmenge erstellt werden können, sowie die Bahnen die in der Realität genutzten Routen (Schwarmtrajektorien), nicht die von einem Planer erwarteten Routen zeigen. So kann diese Vektor-"Karte" zusätzliche Informationen enthalten, beispielsweise wo das Anhalten möglich ist, ohne andere zu behindern, oder wo akzeptable Abweichungen vom optimalen Weg zulässig sind.

Anhand dieser so generierten Vektor- Karte als hochauflösende Karte sowie unter Verwendung aktueller Bewegungsdaten des vorherzusagenden Verkehrsteilnehmers kann nun eine zukünftige Position des Verkehrsteilnehmers sicher bestimmt werden.

Mittels der vorhergesagten Positionen können Gefahrensituationen von vulnerablen Verkehrsteilnehmern erkannt werden, und diese vorab gewarnt werden.

### Bezugszeichenliste

- 1: Speichereinheit
- 2: Prozessor
- 3,3a: künstliches neuronales Netz
- 4: erste Kreise
- 5, 5a: zweite Kreise
- 6: Fahrzeug
- 7a, 7b: Fahrspuren
- 8: Clusteringalgorithmus
- 9: Cluster
- 10: Routenbeseitigungsschritt
- 11: Graphengenerierung
- 12: Gaußsches Mischmodell

## Patentansprüche

1. System zur Prädiktion einer zukünftigen Position von Verkehrsteilnehmern in einem vorgegebenen Straßenabschnitt,
umfassend einer Speichereinheit (1), in welcher zumindest die historischen Sensordaten der erfassten Verkehrsteilnehmer in dem vorgegebenen Straßenabschnitt gespeichert sind,
**dadurch gekennzeichnet, dass**
ein Prozessor (2) vorgesehen ist, welcher die historischen Bewegungsdaten der jeweiligen Verkehrsteilnehmer aus den historischen Sensordaten extrahiert und welcher ferner dazu ausgebildet ist, anhand der historischen Bewegungsdaten eine genügend genaue hochauflösende Karte des vorgegebenen Straßenabschnitts mittels eines maschinellen Lernverfahrens zu erlernen, und wobei
der Prozessor (2) ferner dazu ausgebildet ist, anhand einer Eingabe von aktuellen Bewegungsdaten eines Verkehrsteilnehmers eine Prädiktion zumindest einer zukünftigen Position dieses Verkehrsteilnehmers in diesem Straßenabschnitt zumindest unter einer impliziten Verwendung der erlernten hochauflösenden Karte zu bestimmen.

2. System nach Anspruch 1, **dadurch gekennzeichnet, dass** die erlernte hochauflösende Karte als trainiertes künstliches neuronales Netz (3,3a) ausgebildet ist, und wobei eine Recheneinheit vorgesehen ist zur Eingabe von aktuellen Bewegungsdaten der Verkehrsteilnehmer in diesem Straßenabschnitt in das so generierte künstliche neuronale Netz (3,3a) zur Prädiktion der zukünftigen Positionen der Verkehrsteilnehmer in diesem Straßenabschnitt.

3. System nach Anspruch 2, **dadurch gekennzeichnet, dass** der Prozessor (2) dazu ausgebildet ist, zumindest anhand von relativen historischen Positionen der Verkehrsteilnehmer als Bewegungsdaten eine relative hochauflösende Karte als künstliches neuronales Netz (3) zu generieren und wobei die Recheneinheit dazu ausgebildet ist, bei Eingabe aktueller Bewegungsdaten der Verkehrsteilnehmer in das so generierte künstliche neuronale Netz (3) die relativen zukünftigen Positionen eines Verkehrsteilnehmers zu generieren.

4. System nach Anspruch 3, **dadurch gekennzeichnet, dass** die Bewegungsdaten zusätzlich zu den relativen historischen Positionen der Verkehrsteilnehmer die relativen historischen Geschwindigkeiten der Verkehrsteilnehmer und/oder die relative historische Richtung und/oder die relativen historischen Beschleunigungen umfasst.

5. System nach Anspruch 3 oder 4, **dadurch gekennzeichnet, dass** die Bewegungsdaten die absoluten historischen Positionen, welche zumindest an die relativen historischen Positionen gekoppelt sind, umfassen und wobei der Prozessor (2) dazu ausgebildet ist, eine absolute hochauflösende Karte als künstliches neuronales Netz (3a) zumindest unter Verwendung der historischen relativen und absoluten Positionen der Verkehrsteilnehmer zu generieren und wobei die Recheneinheit dazu ausgebildet ist, bei Eingabe aktueller Bewegungsdaten eines Verkehrsteilnehmers in das so generierte künstliche neuronale Netz (3a) die absoluten zukünftigen Positionen des Verkehrsteilnehmers zu generieren.

6. System nach Anspruch 1, **dadurch gekennzeichnet, dass** der Prozessor (2) dazu ausgebildet ist, aus den historischen Bewegungsdaten historische Schwarmtrajektorien zu generieren und ferner dazu ausgebildet ist, aus den historischen Schwarmtrajektorien eine Vektorkarte als hochauflösende Karte für den Straßenabschnitt zu generieren, und wobei eine Recheneinheit vorgesehen ist, welche dazu ausgebildet ist, eine Prädiktion der zukünftigen Positionen der Verkehrsteilnehmer in diesem Straßenabschnitt unter Verwendung der aktuellen Bewegungsdaten und der Vektorkarte als hochauflösende Karte zu generieren.

7. Verfahren zur Prädiktion einer zukünftigen Position von Verkehrsteilnehmern in einem vorgegebenen straßenabschnitt, **gekennzeichnet durch** die Schritte:
- Bereitstellen zumindest von historischen Sensordaten der erfassten Verkehrsteilnehmer in dem vorgegebenen Straßenabschnitt,
- Extrahieren von historischen Bewegungsdaten der Verkehrsteilnehmer aus den historischen Sensordaten und erlernen anhand der historischen Bewegungsdaten mittels eines maschinellen Lernverfahrens eine genügend genaue hochauflösende Karte für den vorgegebenen Straßenabschnitt, und
- Bestimmen anhand aktueller Bewegungsdaten eines Verkehrsteilnehmers eine Prädiktion zumindest einer zukünftigen Position dieses Verkehrsteilnehmers in diesem Straßenabschnitt zumindest unter einer impliziten Verwendung der erlernten hochauflösenden Karte.

8. Verfahren nach Anspruch 7, **dadurch gekennzeichnet, dass** die erlernte hochauflösende Karte als trainiertes künstliches neuronales Netz (3,3a) ausgebildet wird, zur Eingabe von aktuellen Bewegungsdaten der Verkehrsteilnehmer in diesem Straßenabschnitt in das so generierte künstliche neuronale Netz (3,3a) zur Prädiktion der zukünftigen Positionen der Verkehrsteilnehmer in diesem Straßenabschnitt.

9. Verfahren nach Anspruch 8, **gekennzeichnet durch** die weiteren Schritte:
- Generieren zumindest anhand von relativen historischen Positionen der Verkehrsteilnehmer als Bewegungsdaten eine relative hochauflösende Karte als künstliches neuronales Netz (3) und Eingeben in das künstliche neuronale Netz (3) von aktuellen Bewegungsdaten der Verkehrsteilnehmer zur Generierung relativer zukünftiger Positionen eines Verkehrsteilnehmers.

10. Verfahren nach Anspruch 9, **gekennzeichnet durch** die weiteren Schritte:
- Generieren zumindest anhand von relativen und absoluten historischen Positionen der Verkehrsteilnehmer als Bewegungsdaten eine absolute hochauflösende Karte als künstliches neuronales Netz (3a) und Eingeben in das so generierte künstliche neuronale Netz (3a) von aktuellen Bewegungsdaten der Verkehrsteilnehmer zur Generierung absoluter zukünftiger Positionen eines Verkehrsteilnehmers.

11. Verfahren nach Anspruch 7, **gekennzeichnet durch** den Schritt:
- Generieren von historischen Schwarmtrajektorien, aus den historischen Bewegungsdaten und Generieren einer Vektorkarte als hochauflösende Karte für den Straßenabschnitt aus den historischen Schwarmtrajektorien und Generieren einer Prädiktion der zukünftigen Positionen der Verkehrsteilnehmer in diesem Straßenabschnitt unter Verwendung der aktuellen Bewegungsdaten und der Vektorkarte als hochauflösende Karte.

12. Verfahren nach Anspruch 11, **gekennzeichnet durch** den weiteren Schritt:
- Generieren von historischen Bewegungstrajektorien mit einer vorgegebenen Länge aus den erkannten historischen Bewegungsdaten als relevante Schwarmtrajektorien.

13. Verfahren nach Anspruch 12, **gekennzeichnet durch** den weiteren Schritt:
- Clustern der gleichen oder ähnlichen historischen Bewegungstrajektorien und Erstellen von Routen aus den jeweiligen Clustern (9).

14. Verwendung eines Verfahrens nach einem der vorhergehenden Ansprüche 7 bis 13 oder eines Systems nach einem der vorhergehenden Ansprüche 1 bis 6 zur Prädiktion zumindest der zukünftigen Positionen der erfassten Verkehrsteilnehmer in einem vorgegebenen Straßenabschnitt, in einem Alarmsystem zur Warnung vulnerabler Verkehrsteilnehmer in dem vorgegebenen Straßenabschnitt.
